# EUROPÄISCHE PATENTSCHRIFT

(11) **EP 3 578 509 B1**
(45) Veröffentlichungstag und Bekanntmachung des Hinweises auf die Patenterteilung: **01.09.2021**
(21) Anmeldenummer: 18176762.5
(22) Anmeldetag: 08.06.2018
(51) Int. Cl.: C01B 7/01, C01B 11/02

(54) **VORRICHTUNG ZUR KONTINUIERLICHEN HERSTELLUNG VON EDUKT- UND NEBENPRODUKTFREIEM CHLOR UND CHLORDIOXID**
DEVICE FOR THE CONTINUOUS PRODUCTION OF EDUCT AND BY-PRODUCT-FREE CHLORINE AND CHLORINE DIOXIDE
DISPOSITIF DE PRODUCTION EN CONTINU DE CHLORE ET DE DIOXYDE DE CHLORE SANS ÉDUITS ET SANS SOUS-PRODUITS

(43) Veröffentlichungstag der Anmeldung: 11.12.2019
(73) Patentinhaber: Schmid, Erich, 67435 Neustadt (DE)
(72) Erfinder: Schmid, Erich, 67435 Neustadt (DE)
(74) Vertreter: Zellentin & Partner mbB Patentanwälte

(56) Entgegenhaltungen:
- EP-A1- 2 581 340
- EP-A1- 2 662 328
- WO-A1-2010/069632
- WO-A2-2009/084854
- DE-A1-102010 001 699
- GB-A- 2 527 275

## Beschreibung

Die vorliegende Erfindung betrifft eine Vorrichtung zur kontinuierlichen Herstellung von reinem, d.h. Edukt- und Nebenproduktfreiem Chlor und Chlordioxid.

Chlordioxid ist eine chemische Verbindung von Chlor und Sauerstoff mit der Summenformel ClO₂. Bei Raumtemperatur ist Chlordioxid ein bernsteinfarbenes, explosives und giftiges Gas mit stechendem, chlorähnlichem Geruch.

Die Anwendungen von Chlordioxid beruhen auf seiner Wirkung als Oxidationsmittel. Es ist das wichtigste Bleichmittel der Elementar-Chlor-Freien Bleiche von Zellstoff, insbesondere bei Papier, in der es elementares Chlor fast vollständig ersetzt hat. Zunehmend wird Chlordioxid auch zur Desinfektion vor der Abfüllung von PET-Flaschen verwendet. Weiterhin wird es in der Trinkwasseraufbereitung zur Desinfektion an Stelle von Chlor eingesetzt. Es ist gegen Bakterien genauso oder besser wirksam als Chlor und im Gegensatz zu Chlor auch gegen Viren und viele Protozoen (Einzeller) wirksam.

Zur Chlordioxiderzeugung können viele Verfahren verwendet werden. Am häufigsten ist die Verwendung von Salzsäure und Natriumchlorit als Ausgangskomponenten, da die Herstellung von Chlordioxid aus diesen beiden Komponenten von der Trinkwasserverordnung zugelassen ist. Die Umsetzung erfolgt nach der Gleichung:

5 NaClO₂ + 4 HCl → 4 ClO₂ + 5 NaCI + 2 H₂O

Es können aber auch andere Substanzen mit Natriumchlorit bzw. allgemein mit einem Chlorit umgesetzt werden. Anstelle von Salzsäure eignen sich andere Säuren, wie Schwefelsäure bzw. Säurebildner wie Peroxodisulfate, z. B. Natrium-, Kalium- oder Ammoniumperoxodisulfat, hypochlorige Säure und andere.

Chlordioxidgas kann auch aus Chloraten und Perchloraten hergestellt werden. Diese Umsetzung erfolgt z.B. bei Reaktion von Natriumperchlorat (erhältlich aus einer Elektrolyse von Natriumchlorid) mit Salzsäure nach der Gleichung:

2 NaClO₃ + 4 HCl → 2 ClO₂ + Cl₂ + 2 NaCl + 2 H₂O

Es gibt bereits viele Vorschläge für Vorrichtungen zur Herstellung von Chlordioxid. Die Schwierigkeiten liegen darin, eine möglichst vollständige Umsetzung in adäquater Zeit zu erhalten und dabei explosive Konzentrationen von Chlordioxidgas zu vermeiden. Im Stand der Technik können oft die Ausgangsmaterialien nur in solchen Konzentrationen verwendet werden, in denen das Chlordioxid in einer noch nicht explosionsgefährlichen Konzentration erzeugt wird. Das sind meist Gehalte bis maximal 20 000 ppm. Lösungen in Wasser sind nicht explosiv, sofern sie kein Chlordioxid-Luft-Gemisch mit mehr als 10 Vol.-% Chlordioxid erzeugen können. Auch Vorrichtungen und Verfahren, die zunächst mit konzentrierten Rohstoffen zu arbeiten scheinen, verdünnen vor oder bei der Reaktion die Rohstoffe mit Wasser auf ungefährliche Konzentrationen. Zudem wird Chlordioxid für manche Anwendungen, wie z.B. in Trinkwasser, in reiner Form, d.h. ohne die Edukte und Nebenprodukte der Umsetzung, benötigt. Dies erfordert bei vielen bisherigen Vorschlägen separate Aufbereitungsvorrichtungen.

Zur Lösung dieser Probleme schlagen viele Dokumente ein Abführen des ausgegasten Chlordioxid durch im Gegenstrom geführtes Gas und/oder Vakuum vor. Eine vollständigere Umsetzung der Edukte gelingt durch Vorrichtungen mit mehreren getrennten Reaktionsräumen. Beispiele für solche Vorrichtungen finden sich in DE 967 375 A, DE 31 28 817 A1, DE 32 18 475 A1, DE 32 39 029 A1, WO 2009/084854 A2 und EP 2 662 328 A1. In der DE 10 2010 001 699 A1 und US 6,051,135 A wurde vorgeschlagen, die Umsetzung in einem Schlauchreaktor durchzuführen. Während gemäß der DE 10 2010 001 699 A1 der Schlauch gasdurchlässig sein soll, um gebildetes Chlordioxid aus dem Reaktionsraum abzuziehen, sieht die US 6,051,135 A eine Trennung in einer separaten Strippvorrichtung vor. Beiden Vorschlägen ist gemeinsam, dass die Umsetzung in einer homogenen Reaktionslösung erfolgen soll und die Vollständigkeit der Umsetzung durch die Verweilzeit bestimmt ist. Konzentrierte Edukte sind nur bedingt möglich und die Trennung des Chlordioxid von der Reaktionslösung ist aufwändig. Der zuvor genannte Stand der Technik hat soweit es sich um kontinuierliche Verfahren handelt ähnliche Probleme. Bei der Vorrichtung gemäß EP 2 662 328 A1 ist zwar eine weitgehend vollständige Umsetzung und saubere Abtrennung von Chlordioxid gewährleistet, sie arbeitet jedoch nicht kontinuierlich.

Ein weiteres sehr wichtiges Desinfektionsmittel ist Chlor, welches vor allem in Schwimmbädern zur Wasserdesinfektion eingesetzt wird. Auch in Trinkwasseranlagen ist Chlor üblich, besonders in offenen Anlagen, bei denen Chlordioxid zu stark ausgasen könnte. Chlor kann entweder in Gasflaschen in reiner Form angeliefert und aus diesen dosiert werden oder analog zu Chlordioxid vor Ort erzeugt werden. Die Gasflasche liefert zwar reines Chlor, birgt aber hohe Risiken, die Handhabung erfordert enorme Sicherheitsvorkehrungen. Eine Herstellung vor Ort erfolgt bisher entweder durch Chlor-Alkali-Elektrolyse oder durch Zugabe von Hypochlorit, meist als wässrige Lösung von Natriumhypochlorit oder als festes Calciumhypochlorit.

Bei der Chlor-Alkali-Elektrolyse reagiert Chlorid unter Stromzufuhr mit Wasser zu Chlor, Wasserstoff und Hydroxid. Die Umsetzung erfolgt nach der Gleichung:

2 Cl⁻ + 2 H₂O → Cl₂ + 2 OH⁻ + H₂

Als Nebenprodukte bilden sich abgesehen von Hydroxid und Wasserstoff z.B. Chlorite, Chlorate und Perchlorate, da die Elektrolyse nicht selektiv möglich ist. Die Elektrolyse erfolgt direkt im zu behandelnden Wasser, so wird im Ergebnis mit einer sehr "schmutzigen" Lösung desinfiziert, es gelangen viele Nebenprodukte ins Wasser. Die entstehende Lauge kann zur pH-Wert Justierung des Schwimmbadwassers verwendet werden oder muss stark verdünnt - z.B. mit enthärtetem Wasser - ins Abwasser entsorgt werden.

Die Erzeugung aus Hypochlorit und Säure erfolgt gemäß den Gleichungen (am Beispiel von Natriumhypochlorit und Salzsäure):

NaOCl + 2 HCl → HOCl + 2 H₂O

HOCl + HCl → Cl₂ + HCl

Bei der Verwendung von Natriumhypochloritlösung oder Calciumhypochlorit sind bedingt durch deren Herstellung immer Chloride und Chlorate enthalten. Zudem disproportioniert Hypochlorit in wässriger Lösung zu Chlorid und Chlorat, siehe z.B. "Hygieneanforderungen an Bäder und deren Überwachung", Bundesgesundheitsblatt 2014, DOl 10.1 007/s001 03-013-1899-7. Deren Gehalt steigt somit immer weiter an. Da die Lösung direkt dem Wasser zugeführt wird sind diese Nebenprodukte unerwünscht, Chlorid weil es Korrosion verursacht und Chlorat weil es gesundheitlich bedenklich ist. Außerdem erhöht der Zusatz von Natronbleichlauge oder Chlorkalk den pH Wert des Wassers. Dieser muss daher - umständlich - mittels Säure, z.B. Schwefelsäure oder saurem Bisulfat, wieder auf den niedrigen pH Wert eingestellt werden, den die Hypochlorige Säure für gute und effektive Wirkung (Umsetzung zu Chlor) braucht. Daher wäre es wünschenswert, reines Chlor sicher und ohne die mit Gasflaschen verbundenen Risiken bereitstellen zu können.

Es besteht daher weiter die Aufgabe, verbesserte Vorrichtungen bzw. Verfahren zur Herstellung von reinem Chlor und Chlordioxid zu finden, bei denen unter besonderer Berücksichtigung des Gefährdungspotentials höhere Konzentrationen der Ausgangsmaterialien verwendet werden können. Außerdem besteht die Aufgabe, den Einsatz großer Reaktionslösungsvolumina zu erlauben und somit Anlagen mit hoher Leistung bereitzustellen.

Diese Aufgabe konnte überraschend durch eine Vorrichtung zur Herstellung von reinem Chlor und/oder Chlordioxid gelöst werden, die einen Reaktor, getrennte Leitungen für die Zufuhr einer Perchlorat-, Chlorat-, Hypochlorit- und/oder Chloritlösung und einer Säurelösung und eine mit dem Reaktor verbundene Vakuumpumpe und/oder eine Druckgaszufuhr umfasst, wobei der Reaktor von einem Wellschlauch gebildet wird, der horizontal oder mit einem Gefälle angeordnet ist, die Leitungen für die Zufuhr und die Verbindung zur Vakuumpumpe oder ein Gasauslass in einem Abschnitt an einem Ende, dem Eingangsende, des Reaktors angeordnet sind und ein Auslass für flüssige Phase sowie ggfs. die Druckgaszufuhr an dem anderen Ende, dem Ausgangsende, des Reaktors, wobei der Durchmesser des Reaktors, die Zufuhrmengen von Perchlorat-, Chlorat-, Hypochlorit- und/oder Chloritlösung und Säurelösung, das Vakuum/die Druckgaszufuhr und ggfs. das Gefälle des Reaktors so aufeinander abgestimmt sind, dass die Perchlorat-, Chlorat-, Hypochlorit- bzw. Chloritlösung und die Säurelösung eine flüssige Phase zur Umsetzung von Perchlorat, Chlorat, Hypochlorit und/oder Chlorit mit Säure zu Chlor und/oder Chlordioxid bilden und das Chlor und/oder Chlordioxid aus der flüssigen Phase ausgast und eine Gasphase bildet, wobei die flüssige Phase und die Gasphase im Gegenstrom geführt werden. Die Gasphase kann also mit einer Vakuumpumpe am Eingangsende abgesaugt werden oder alternativ oder zusätzlich durch ein mit Überdruck am Ausgangsende zugeführtes Verdünnungsgas durch einen Gasauslass am Eingangsende aus dem Reaktor heraus bzw. in die Vakuumpumpe gedrückt werden.

Die erfindungsgemäße Vorrichtung wird kontinuierlich betrieben, somit treten in der Regel keine Konzentrationsschwankungen im Chlor bzw. Chlordioxidprodukt auf. Durch die Abführung des Chlor und/oder Chlordioxid im Gegenstrom wird die Reaktionsgleichung in Richtung der gewünschten Gase verschoben, so dass die vollständige Umsetzung gewährleistet ist und die Konzentration im sicheren Bereich bleibt.

Als Reaktor dient ein Wellschlauch. Wellschläuche, auch als Wellrohre bezeichnet, sind seit langem bekannt. Sie dienen als biegsame bzw. flexible oder auch starre Leitungen und Schutzrohre und sind in vielen Abmessungen und aus verschiedensten Materialien erhältlich. Die vorliegende Erfindung macht sich die sonst oft als nachteilig angesehene Ausbildung von Kompartimenten durch die Wellung zunutze. Diese bilden nämlich voneinander getrennte Reaktionsräume aus, was die Umsetzung von Hypochlorit und/oder Chlorit mit Säure intensiviert und die Ausgasung fördert. In den Vertiefungen des wellschlauchförmigen Reaktors bilden sich einzelne Kompartimente, die eine längere Verweilzeit der die Reaktionslösung bildenden flüssigen Phase und damit eine vollständigere Umsetzung bewirken. Zwar könnten auch glatte Schläuche verwendet werden, in diesen würde jedoch keine so intensive Vermischung erfolgen, für die Umsetzung wären viel längere Reaktoren nötig. Im Rahmen der Erfindung umfasst der Begriff Wellschlauch auch außen glatte Schläuche mit Einbauten auf der Innenoberfläche sowie wellenförmig angeordnete glatte Schläuche, die jeweils in gleicher Weise wie die Kompartimente im Wellschlauch voneinander getrennte Reaktionsräume ausbilden. Außerdem umfasst der Begriff Schlauch Vorrichtungen aus steiferem und steifem Material, die üblicherweise eher als Rohr bezeichnet werden.

Als Material des Reaktors wird erfindungsgemäß bevorzugt Polytetrafluorethylen verwendet, andere unter den vorliegenden Bedingungen gegenüber Hypochlorit, Chlorit und Säure sowie Chlor und Chlordioxid ausreichend stabile Materialien können auch verwendet werden. Das Material sollte in der gewählten Materialstärke für Chlor und Chlordioxid (im wesentlichen) undurchlässig sein.

Der Wellschlauch-Reaktor weist eine im Vergleich zum Durchmesser große Länge auf, die sowohl eine vollständige Umsetzung als auch eine vollständige Ausgasung von Chlor bzw. Chlordioxid im Gegenstromverfahren sichert. Bevorzugt beträgt das Verhältnis von Durchmesser zu Länge mindestens 1:100, besonders bevorzugt mindestens 1:200. Der Durchmesser des Reaktors wird vorteilhaft so gewählt, dass bei der Umsetzung ein rascher Gastransport von Chlor und/oder Chlordioxid in Richtung der Vakuumpumpe/des Gasauslasses erfolgt ohne dass die flüssige Phase in Richtung der Vakuumpumpe(n)/des Gasauslasses gesaugt/gedrückt wird. Der Vorteil des raschen Gastransports ist die niedrige Konzentration an Chlordioxid, das bei höheren Konzentrationen in der Gasphase zur Zersetzung/Explosion neigt bzw. an Chlor, das sonst nicht ausreichend ausgasen würde. Die Länge des Reaktors wird bevorzugt so gewählt, dass bei der Umsetzung eine vollständige Ausgasung von Chlor bzw. Chlordioxidgas aus der flüssigen Phase stattfindet.

Die absoluten Größen der Reaktordimensionen richten sich nach der gewünschten Menge Chlor bzw. Chlordioxid, Reaktoren mit größeren Durchmessern und/oder größerer Länge erlauben die Herstellung einer höheren Menge Chlor bzw. Chlordioxid pro Zeiteinheit. Typische Durchmesser liegen im Bereich von 1 bis 10 cm, insbesondere von 2 bis 5 cm. Diese Angabe bezieht sich auf den lichten Innendurchmesser, der Außendurchmesser ist bedingt durch die wellenförmige Wandung sowohl innen als auch außen größer. Eine Wellung mit einer Tiefe von 5 bis 30 %, bevorzugt 15 bis 25 % des Innendurchmessers hat sich als geeignet erwiesen. Der Abstand der Wellen beträgt in der Regel von 50 bis 300 % der Tiefe, bevorzugt 150 bis 200 % der Tiefe. Die Länge des Reaktors beträgt üblicherweise 0,5 bis 50 m, insbesondere 1 bis 20 m.

Der Wellschlauch-Reaktor kann horizontal oder mit einem Gefälle, jedoch nicht vertikal, in der Vorrichtung angeordnet sein. Bei Anordnung mit Gefälle kann der Durchmesser des Reaktors im Vergleich zu horizontal angeordneten Reaktoren enger gewählt werden, da die Schwerkraft die flüssige Phase trotz des gegenläufigen Stroms der Gasphase zum Auslass des Reaktors befördern hilft. Vorteilhaft kann auch der Raum für die Gasphase kleiner sein, wodurch die Gasphase schneller strömt und die Konzentration des Chlor bzw. Chlordioxid und damit die Explosionsgefahr sinkt bzw. die Ausgasung gefördert wird. Das Gefälle kann in weiten Grenzen variieren, von horizontal bis hin zu 70°. Größere Gefälle wären möglich, erscheinen aber nicht sinnvoll, da die Strömungsgeschwindigkeit der flüssigen Phase sehr hoch würde und damit sehr lange Reaktoren benötigt würden, um die gewünschte weitgehende bis vollständige Umsetzung von Perchlorat, Chlorat, Hypochlorit bzw. Chlorit mit Säure und Ausgasung des Chlor und/oder Chlordioxid zu erreichen. Bei exakt horizontaler Verlegung des Reaktors können bei geeignet größerem Durchmesser auch größere Mengen flüssige Phase im Reaktor enthalten sein. In jedem Fall muss die Gasphase ausreichend Raum haben, um ein Ansaugen/Herausdrücken der flüssigen Phase durch die Pumpe/den Gasauslass zu verhindern.

Zweckmäßig wird der Reaktor in der Vorrichtung aufgewickelt. Horizontale Reaktoren können z.B. um einen Kern gewickelt werden, Reaktoren mit Gefälle beispielsweise um ein Rohr oder eine Stange gewickelt werden. Kleine Reaktoren sind in der Regel flexibel und biegsam und werden daher erst beim Einbau in der erfindungsgemäßen Vorrichtung in der gewünschten Anordnung fixiert. Bei wachsenden Durchmessern kommen eher zunehmend starre Reaktoren zum Einsatz, die meist bereits bei der Herstellung in die gewünschte Anordnung gebracht werden (müssen).

Eine erhöhte Produktionsmenge kann erfindungsgemäß durch Verwendung eines längeren Reaktors mit einem größeren Durchmesser erreicht werden. Alternativ kann die Anzahl der Reaktoren pro Vorrichtung erhöht werden, wobei vorteilhaft die Vakuumpumpe/Druckgaszufuhr und die Zufuhr von Hypochlorit und/oder Chlorit und Säure gemeinsam genutzt werden.

Erfindungsgemäß wird Chlordioxid bevorzugt aus Chlorit und Säure, gemeinsam als Edukte bezeichnet, hergestellt. Eine Herstellung von Chlordioxid aus Chlorat und/oder Natriumhypochlorit und Säure führt zu mit Chlor vermischtem Chlordioxidgas. Solches Chlordioxid kann vorteilhaft sein, z.B. wird es in einigen Fällen zur Trinkwasserdesinfektion benutzt.

Die Herstellung von Chlor erfolgt in einer ersten Ausführungsform aus Hypochlorit und Säure, ebenfalls gemeinsam als Edukte bezeichnet. Für die gezielte Herstellung von Gemischen aus Chlor und Chlordioxid werden Hypochlorit und Chlorit, einzeln oder im Gemisch, mit Säure umgesetzt, auch hier werden Hypochlorit, Chlorit und Säure gemeinsam als Edukte bezeichnet. Außerdem können Perchlorat und Chlorat zur gemeinsamen Erzeugung von Chlor und Chlordioxid verwendet werden, wobei Perchlorat und Säure sowie Chlorat und Säure jeweils auch gemeinsam als Edukte bezeichnet werden.

Als Chlorit werden Alkali- und Erdalkalichlorite bevorzugt, ganz besonders wird Natriumchlorit bevorzugt. Es sind jedoch alle Chlorite einsetzbar, beispielsweise Kaliumchlorit, ebenso Gemische von Chloriten. Handelsübliche Lösungen die direkt verwendet werden können enthalten z.B. 20 - 30 Gew.-% Natriumchlorit.

Als Hypochlorit werden Natriumhypochlorit und Kaliumhypochlorit bevorzugt, wobei ebenfalls andere Hypochlorite und Gemische verwendet werden können. Als Perchlorat werden Natriumperchlorat und Kaliumperchlorat bevorzugt, wobei ebenfalls andere Perchlorate und Gemische verwendet werden können. Auch als Chlorat werden Natriumchlorat und Kaliumchlorat bevorzugt, wobei ebenfalls andere Chlorate und Gemische verwendet werden können.

Schließlich können zur gezielten Herstellung von Gemischen aus Chlor und Chlordioxid Gemische von Natriumchlorit mit Natriumhypochlorit und/oder Kaliumhypochlorit oder nur Natriumhypochlorit oder Kaliumhypochlorit verwendet werden.

Die Bezeichnung Perchlorat, Chlorat, Hypochlorit und/oder Chlorit bedeutet ebenso wie die Bezeichnung Perchlorat, Chlorat, Hypochlorit bzw. Chlorit, dass es sich um Perchlorat oder um Chlorat oder um Chlorit oder um Hypochlorit oder um ein Gemisch von zwei, drei oder allen davon, insbesondere um ein Gemisch von Chlorit mit Hypochlorit handelt.

Als Säure wird Salzsäure bevorzugt, jedoch kann auch jede andere chlor- bzw. chlordioxidstabile Säure verwendet werden, beispielsweise organische Säuren wie Essigsäure und Zitronensäure, oder andere Mineralsäuren, wie beispielsweise Schwefelsäure und hypochlorige Säure. Auch Mischungen von Säuren sind geeignet. Weiterhin sind auch solche Substanzen als Säure geeignet, die die Säure erst in wässriger Lösung freisetzen, wie beispielsweise Peroxodisulfate, insbesondere Natrium- oder Kaliumperoxodisulfat. Unter dem Begriff Säure sind daher im Rahmen der vorliegenden Erfindung auch säurebildende Substanzen wie Peroxodisulfate zu verstehen. Bevorzugte Salzsäurelösungen enthalten von 20 bis 37 Gew.-%, insbesondere 30 bis 33 Gew.-% HCl.

Perchlorat, Chlorat, Hypochlorit und/oder Chlorit und Säure werden in der Regel aus Vorratsbehältern dosiert. Dazu kann jede an sich bekannte Dosiervorrichtung eingesetzt werden, beispielsweise eine Proportionalpumpe oder Ventile kombiniert mit der Schwerkraft.

Säure und Perchlorat, Chlorat, Hypochlorit bzw. Chlorit werden dem Reaktor mit Hilfe getrennter Leitungen an einem Ende des Reaktors, genauer in einem Abschnitt an einem Ende des Reaktors, zugeführt. Sowohl Perchlorat, Chlorat, Hypochlorit bzw. Chlorit als auch Säure werden als wässrige Lösung eingesetzt. Es ist ein Vorteil der erfindungsgemäßen Vorrichtung, dass die Konzentration der Lösungen vergleichsweise hoch sein kann. Geeignet sind beispielsweise 28 Gew.-%-ige Natriumchloritlösung und 33 Gew.-%-ige Salzsäure.

Perchlorat-, Chlorat-, Hypochlorit- bzw. Chloritlösung und Säurelösung bilden im Reaktor eine flüssige Phase, in der durch die Umsetzung von Perchlorat, Chlorat, Hypochlorit bzw. Chlorit mit Säure Chlor bzw. Chlordioxid entsteht. Die Umsetzung ist exotherm, so dass bei der Dimensionierung des Reaktors und der Abstimmung von Abmessungen, Vakuum/Druckgaszufuhr und Zufuhrmengen der Edukte die gebildete Wärme zu berücksichtigen ist. Nötigenfalls kann auch eine Wärmeabführung erfolgen, beispielsweise durch zusätzliche Zufuhr von Wasser und/oder eine Kühlung.

In einer Ausführungsform wird demgemäß dem Reaktor zusätzlich zu der Perchlorat-, Chlorat-, Hypochlorit- bzw. Chloritlösung und der Säurelösung Wasser zugeführt. Dazu kann auch ein Teil der am Auslass anfallenden flüssigen Phase verwendet werden. Das zusätzlich zugeführte Wasser verdünnt die aus Perchlorat-, Chlorat-, Hypochlorit- und/oder Chloritlösung und Säurelösung gebildete flüssige Phase. Die Wasserzufuhr erlaubt die Verwendung konzentrierter Lösungen von Perchlorat, Chlorat, Hypochlorit bzw. Chlorit und Säure ohne Explosionsgefahr.

In einer weiteren Ausführungsform kann der Reaktor eine externe und/oder interne Kühlung aufweisen. Die Kühlung kann für den gesamten Reaktor oder nur für einen Abschnitt erfolgen. Geeignet ist z.B. die Anordnung des Reaktors in einem Temperierbad, eine doppelwandige Ausführung des Reaktors mit einem Temperiermedium im Außenmantel oder die Anordnung eines dünnen Temperiermittelschlauches im Inneren des Reaktors. Ein Temperiermittel kann im Gleich- oder Gegenstrom mit der flüssigen Phase geführt werden. Es ist weiter denkbar, den Reaktor mit Temperiermittel zu besprühen oder zu überströmen.

Eine weitere Möglichkeit zur Kontrolle der Wärmeentwicklung besteht darin, die Zufuhr von Perchlorat, Chlorat, Hypochlorit bzw. Chlorit und/oder Säure an mehreren Stellen des Reaktors hintereinander vorzusehen. Durch die schrittweise Zufuhr wird eine punktuell hohe Chlor- bzw. Chlordioxidgaskonzentration und Wärmeentwicklung vermieden. Hierbei werden zwei, drei oder noch mehr Leitungen für die Zufuhr eines oder beider Edukte verwendet. Die Dosierung erfolgt dabei vorzugsweise mit einer Dosiervorrichtung für alle Leitungen eines Edukts, kann aber auch für jede Leitung oder Gruppen von Leitungen eines Edukts mit getrennten Dosiervorrichtungen erfolgen. Bevorzugt kann eine schrittweise Zufuhr durch eine Leitung mit mehreren Auslässen/Dosierpunkten erfolgen. Beispielsweise kann die Zuleitung eines der (oder weniger bevorzugt beider) Edukte mittels einer in den Reaktor eingeführten Leitung erfolgen, welche in festgelegten Abständen Öffnungen oder Düsen enthält, z.B. 2 bis 15, vorzugsweise 5 bis 10 Öffnungen/Düsen. Der Durchmesser einer solchen Leitung ist viel kleiner als der des Reaktors, z.B. nur 1 bis 10 % des Durchmessers, so dass genug Raum für die Gasphase und die flüssige Phase verbleibt. Geeignete Abstände der Öffnungen/Düsen hängen von der Fließgeschwindigkeit der flüssigen Phase ab, bei 0,5 m/h eignen sich z.B. Abstände von 5 bis 60 cm, vorzugsweise von 20 bis 40 cm.

Das bei der Umsetzung von Perchlorat, Chlorat, Hypochlorit bzw. Chlorit mit Säure gebildete Chlor bzw. Chlordioxid gast aus der flüssigen Phase aus, bildet eine Gasphase und wird mittels einer Vakuumpumpe abgesaugt und/oder mit Druckgas herausgedrückt. Als Vakuumpumpe kann jede beliebige, dem Fachmann bekannte Vakuumpumpe eingesetzt werden, bevorzugt wird eine Wasserstrahlpumpe. Es können auch mehrere Vakuumpumpen/Druckgaszufuhren verwendet werden. Eine Wasserstrahlpumpe hat den Vorteil, dass das Chlor bzw. Chlordioxid zur Bereitstellung als wässrige Lösung direkt im Antriebswasser gelöst werden kann. Bei einer Saugleistung von 500 bis 1500 Liter pro Stunde, bevorzugt etwa 1000 Liter pro Stunde, werden so etwa 1,5 bis 4,5 Liter Wasser pro Minute benötigt, so dass 90 bis 270 Liter wässrige Chlor- bzw. Chlordioxidlösung hergestellt werden können. Der Gehalt an Chlordioxid beträgt typischerweise etwa 500 bis 3000 ppm, bei Chlor 50 bis 3000 ppm.

Die Abführung des Chlor bzw. Chlordioxid kann durch Zufuhr eines Verdünnungsgases optimiert werden. Als Verdünnungsgas eignet sich vor allem Luft, aber auch Kohlenstoffdioxid, Stickstoff und andere chlor- bzw. chlordioxidstabile Gase. Ein besonders bevorzugtes Verdünnungsgas ist ein Aerosol aus Wasser in einem der erwähnten Gase, insbesondere Luft. Chlor bzw. Chlordioxid löst sich in den feinsten Wassertröpfchen und damit wird die Konzentration des Chlor bzw. Chlordioxid in der Gasphase und die Explosionsgefahr bzw. das nicht ausgegaste Chlor vermindert, es sind höhere Konzentrationen, Durchsätze bzw. Leistungen möglich. In der Regel wird das Verdünnungsgas dem Reaktor nahe bei oder durch den Auslass für die flüssige Phase zugeführt. Alternativ erfolgt die Zufuhr an oder in Gasströmungsrichtung kurz vor der Stelle der höchsten Chlor- bzw. Chlordioxidkonzentration. Es kann vorteilhaft sein, das Verdünnungsgas oder verschiedene Verdünnungsgase an mehreren Stellen zuzuführen. In einer Variante wird z.B. zusätzlich zu Luft vom Auslass her in dem Bereich der höchsten Chlor- bzw. Chlordioxidkonzentration Aerosol aus Wasser/Luft zugeführt.

In einer bevorzugten Ausführungsform wird der Perchlorat-, Chlorat-, Hypochlorit- bzw. Chloritlösung ein Carbonat und/oder Hydrogencarbonat zugefügt, aus dem parallel zur Erzeugung des Chlor bzw. Chlordioxid als Verdünnungsgas Kohlenstoffdioxid erzeugt wird. Zur Vereinfachung wird im folgenden von (Hydrogen)carbonat gesprochen, was sowohl Hydrogencarbonat als auch Carbonat als auch Mischungen davon bezeichnet. Handelsübliche Natriumchloritlösung enthält zwar üblicherweise bereits eine geringe Menge Natriumcarbonat, das daraus gebildete Kohlenstoffdioxidgas verursacht aber keine merklichen Effekte. Erfindungsgemäß wird von 0,25 bis 5 mol (Hydrogen)carbonat pro mol Perchlorat, Chlorat, Hypochlorit bzw. Chlorit verwendet, insbesondere von 0,5 bis 3 mol (Hydrogen)carbonat pro mol Perchlorat, Chlorat, Hypochlorit bzw. Chlorit. Die Angaben verstehen sich in Bezug auf ein Gemisch von z.B. Hypochlorit und Chlorit so, dass deren gesamte Menge gemeint ist. Werden beispielsweise Hypochlorit und Chlorit verwendet, so werden pro mol der Summe an Hypochlorit und Chlorit je 0,25 bis 5 mol (Hydrogen)carbonat verwendet. Wird nur eines von Perchlorat, Chlorat, Hypochlorit oder Chlorit eingesetzt, bezieht sich die Molmengenangabe auf dieses allein.

Als (Hydrogen)carbonat sind Kaliumhydrogencarbonat und Kaliumcarbonat besonders bevorzugt, da sie gut löslich sind. Kaliumhydrogencarbonat benötigt weniger Säure, während Kaliumcarbonat eine größere Menge Salze bildet, welche das Ausgasen des Chlor bzw. Chlordioxid fördern. Natriumhydrogencarbonat sowie Natrium- und Kaliumcarbonat oder Gemische der genannten (Hydrogen)carbonate sind ebenfalls brauchbar. Die Verwendung anderer (Hydrogen)carbonate ist wegen der geringen Löslichkeit und/oder eines höheren Preises dieser Substanzen nicht wirtschaftlich. Der große Vorteil des Einsatzes von (Hydrogen)carbonat in der Perchlorat-, Chlorat-, Hypochlorit- bzw. Chloritlösung besteht darin, dass das Verdünnungsgas Kohlendioxid zusammen mit dem Chlor bzw. Chlordioxid gebildet wird, d.h. genau an der Stelle, wo es gebraucht wird. Somit steht an Orten hoher Chlor- bzw. Chlordioxidkonzentration auch eine große Menge Verdünnungsgas zur Verfügung. Natürlich kann weiteres Verdünnungsgas wie oben beschrieben zugeführt werden, besonders bevorzugt ein Aerosol, insbesondere ein Wasser-Luft Aerosol. Weitere Vorteile des Zusatzes von (Hydrogen)carbonat sind eine geringere Löslichkeit des Chlor bzw. Chlordioxid in der wässrigen Phase, da diese mehr Salz enthält, sowie eine Verbesserung der Ausgasung da die gebildeten Kohlenstoffdioxidbläschen Chlor bzw. Chlordioxid mitreißen. Es versteht sich, dass die Menge des zugesetzten (Hydrogen)carbonat nicht so hoch gewählt wird, dass gebildeter Schaum den Gasraum des Reaktors komplett einnimmt.

Alternativ zu einem Zusatz von (Hydrogen)carbonat in der Perchlorat-, Chlorat-, Hypochlorit- bzw. Chloritlösung kann (Hydrogen)carbonat auch dem ggfs. zugeführten zusätzlichen Wasser zugesetzt werden. Bei Zufuhr der Perchlorat-, Chlorat-, Hypochlorit- bzw. Chloritlösung an mehreren Stellen des Reaktors ist es ebenfalls denkbar, verschiedene Perchlorat-, Chlorat-, Hypochlorit- bzw. Chloritlösungen, nämlich solche mit und solche ohne Zusatz von (Hydrogen)carbonat, einzusetzen.

Das ausgegaste Chlor bzw. Chlordioxid wird vorzugsweise in entsalztem oder frischem Wasser gelöst und kann als wässrige Lösung zur Anwendung gelangen. Mit frischem Wasser ist hier Wasser gemeint, dass nicht Edukte oder Nebenprodukte der Herstellung des Chlor bzw. Chlordioxid enthält. Es ist natürlich auch möglich, das ausgegaste Chlor bzw. Chlordioxid direkt, z.B. zur Trinkwasserdesinfektion zu verwenden, ohne es zuvor in Wasser zu lösen.

Die flüssige Phase verarmt während der Durchströmung des Reaktors zunehmend an Perchlorat, Chlorat, Hypochlorit bzw. Chlorit und Säure und reichert sich mit dem Nebenprodukt Säurechlorid an. Am anderen Ende des Reaktors befindet sich ein Auslass, durch welchen die flüssige Phase aus dem Reaktor ausgeleitet wird. Die am Auslass ankommende flüssige Phase enthält bei korrekter Abstimmung von Reaktordimensionen, Vakuum und Zufuhrmengen im wesentlichen weder Edukte (Perchlorat, Chlorat, Hypochlorit bzw. Chlorit und Säure) noch Chlor bzw. Chlordioxid. Daher kann sie direkt dem Abwasser zugeführt werden, es sei denn das Säurechlorid müsste entfernt werden. Das Nebenprodukt bei Natrium(hypo)chlorit und Salzsäure als Edukt ist Natriumchlorid und bedarf keiner besonderen Entsorgung.

Die Erfindung soll anhand der beigefügten Figur erläutert werden, ohne jedoch auf die speziell beschriebene Ausführungsform beschränkt zu sein. Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

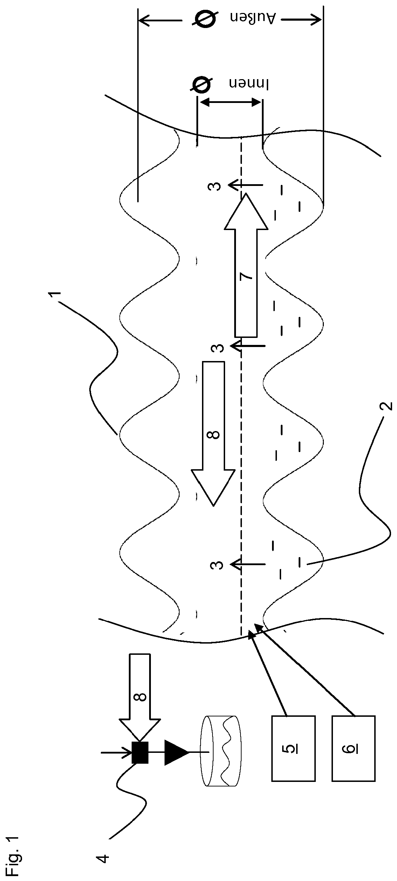

In Figur 1 ist die erfindungsgemäße Vorrichtung schematisch veranschaulicht. Es ist ein Abschnitt eines Wellschlauch-Reaktors 1 gezeigt. Der Abschnitt am ersten Ende des Reaktors 1 ist hier auf der linken Seite und dort sind die nicht dargestellten Leitungen für die Zufuhr von Perchlorat, Chlorat, Hypochlorit bzw. Chlorit und Säure aus den Vorratsbehältern 5, 6 sowie die Verbindung zur Vakuumpumpe 4 angeordnet. Auf der rechten Seite sind der ebenfalls nicht dargestellte Auslass für die flüssige Phase 2 sowie die Zuleitung für Aerosol angeordnet. Der Reaktor 1 ist hier horizontal, die flüssige Phase 2 strömt aufgrund der Zufuhr von Perchlorat-, Chlorat-, Hypochlorit- bzw. Chloritlösung und Säurelösung Richtung Auslass. Das Aerosol strömt aufgrund des Vakuums/der Druckgaszufuhr im Gegenstrom durch den Reaktor 1 und nimmt dabei das aus der flüssigen Phase 2 ausgasende Chlor bzw. Chlordioxid 3 auf. Wie schematisch dargestellt, wird das mit Chlor bzw. Chlordioxid 3 beladene Aerosol durch eine Wasserstrahlpumpe 4 in frisches Wasser einkondensiert.

### Beispiel

Eine erfindungsgemäße Vorrichtung wurde mit 10 m Wellschlauch mit Innendurchmesser 26,4 mm und Aussendurchmesser 34,3 mm, der in einem Rohr mit 40 cm Innendurchmesser gewickelt verlegt wurde, als Reaktor erstellt. Das Gefälle betrug jeweils einen Schlauchdurchmesser pro Windung, der Auslauf der entgasten Flüssigkeit erfolgte am unteren Ausgangsende, die Eindosierung und die Gasabsaugung durch eine Wasserstrahlpumpe erfolgten am oberen Eingangsende des Reaktors. Die Wasserstrahlpumpe wurde mit einer Saugleistung von ca. 1000 Liter/Stunde, das entsprach einem Wasserverbrauch 3 Liter/Minute, betrieben. Die Edukte-Zudosierung betrug: 3 Liter Natriumchlorit 14 Gew.-%-ig und 2 Liter Salzsäure 16 Gew.-%-ig pro Stunde. Im Betrieb wurden aus dem Antriebswasser der Wasserstrahlpumpe ca. 180 Liter wässrige neutrale Lösung mit einem Gehalt von ca. 1200 ppm Chlordioxid pro Stunde erhalten.

### Bezugszeichenliste

- 1: Reaktor
- 2: flüssige Phase
- 3: Chlor bzw. Chlordioxid
- 4: Vakuumpumpe
- 5: Vorratsbehälter Perchlorat-, Chlorat-, Hypochlorit- bzw. Chloritlösung
- 6: Vorratsbehälter Säurelösung
- 7: Strömungsrichtung flüssige Phase
- 8: Strömungsrichtung Chlor bzw. Chlordioxid und Aerosol

## Patentansprüche

1. Vorrichtung zur kontinuierlichen Herstellung von reinem Chlor und/oder Chlordioxid, die einen Reaktor (1), getrennte Leitungen für die Zufuhr von Perchlorat-, Chlorat-, Hypochlorit- und/oder Chloritlösung und Säurelösung und eine mit dem Reaktor (1) verbundene Vakuumpumpe (4) und/oder Druckgaszufuhr umfasst
**dadurch gekennzeichnet, dass**
der Reaktor (1) von einem Wellschlauch gebildet wird, der horizontal oder mit einem Gefälle angeordnet ist, die Leitungen für die Zufuhr von Perchlorat-, Chlorat-, Hypochlorit- und/oder Chloritlösung und Säurelösung und die Verbindung zur Vakuumpumpe (4) und/oder einen Gasauslass in einem Abschnitt an einem Ende, dem Eingangsende, des Reaktors (1) angeordnet sind und ein Auslass sowie ggfs. eine Druckgaszufuhr an dem anderen Ende, dem Ausgangsende, des Reaktors (1), wobei der Durchmesser des Reaktors (1), die Zufuhrmengen von Perchlorat-, Chlorat-, Hypochlorit- und/oder Chloritlösung und Säurelösung, das Vakuum/die Druckgaszufuhr und ggfs. das Gefälle des Reaktors (1) so aufeinander abgestimmt sind, dass die zugeführte Perchlorat-, Chlorat-, Hypochlorit- und/oder Chloritlösung und Säurelösung eine flüssige Phase (2) zur Umsetzung von Perchlorat, Chlorat, Hypochlorit und/oder Chlorit mit Säure zu Chlor und/oder Chlordioxid (3) bilden und das Chlor und/oder Chlordioxid (3) aus der flüssigen Phase (2) ausgast und eine Gasphase bildet, wobei die flüssige Phase und die Gasphase im Gegenstrom geführt werden.

2. Vorrichtung gemäß Anspruch 1, **dadurch gekennzeichnet, dass** sie eine Zufuhr für Verdünnungsgas umfasst, wobei das Verdünnungsgas vorzugsweise Luft, Kohlenstoffdioxid, Stickstoff oder ein anderes chlor- und chlordioxidstabiles Gas oder besonders bevorzugt ein Aerosol aus Wasser in Luft oder einem anderen der genannten Gase ist.

3. Vorrichtung gemäß Anspruch 1 oder 2, **dadurch gekennzeichnet, dass** mehrere Zufuhrstellen für Verdünnungsgas vorhanden sind, bevorzugt eine am Auslass und eine an der Stelle höchster Chlor- und/oder Ch lordioxidkonzentration.

4. Vorrichtung gemäß einem der Ansprüche 1 bis 3, **dadurch gekennzeichnet, dass** dem Reaktor (1) eine Lösung enthaltend Hydrogencarbonat und/oder Carbonat zugeführt wird, wobei die Menge an Hydrogencarbonat und/oder Carbonat so bemessen wird, dass durch die Reaktion mit der Säure eine als Verdünnungsgas wirksame Menge Kohlenstoffdioxid gebildet wird, vorzugsweise sind 0,25 bis 5 mol Hydrogencarbonat und/oder Carbonat pro mol Perchlorat, Chlorat, Hypochlorit und/oder Chlorit in der Perchlorat-, Chlorat-, Hypochlorit- und/oder Chloritlösung enthalten.

5. Vorrichtung gemäß einem der Ansprüche 1 bis 4, **dadurch gekennzeichnet, dass** der Reaktor (1) ein Verhältnis von Durchmesser zu Länge von mindestens 1:100, vorzugsweise mindestens 1:200 aufweist.

6. Vorrichtung gemäß einem der Ansprüche 1 bis 5, **dadurch gekennzeichnet, dass** der Reaktor (1) eine Länge von 0,5 bis 50 m, bevorzugt von 1 bis 20 m, aufweist.

7. Vorrichtung gemäß einem der Ansprüche 1 bis 6, **dadurch gekennzeichnet, dass** der Reaktor (1) ein Gefälle von horizontal bis 60° aufweist und vorzugsweise um ein Rohr oder eine Stange gewickelt ist.

8. Vorrichtung gemäß einem der Ansprüche 1 bis 7, **dadurch gekennzeichnet, dass** sie in dem Abschnitt an einem Ende des Reaktors (1) eine Wasserzufuhr aufweist.

9. Vorrichtung gemäß einem der Ansprüche 1 bis 8, **dadurch gekennzeichnet, dass** der Reaktor (1) eine äußere und/oder innere Kühlung aufweist.

10. Vorrichtung gemäß einem der Ansprüche 1 bis 9, **dadurch gekennzeichnet, dass** die Leitungen für Zufuhr von Perchlorat-, Chlorat-, Hypochlorit- und/oder Chloritlösung und/oder Säurelösung verzweigt sind und an mehreren hintereinander liegenden Stellen des Reaktors (1) angeordnet sind.

11. Vorrichtung gemäß einem der Ansprüche 1 bis 10, **dadurch gekennzeichnet, dass** sie einen Behälter mit frischem oder entsalztem Wasser aufweist, in dem das aus dem Reaktor (1) ausgegaste Chlor- und/oder Chlordioxidgas (3) gelöst wird.

## Claims

1. Device for the continuous production of pure chlorine and/or chlorine dioxide, which comprises a reactor (1), separate lines for the supply of perchlorate, chlorate, hypochlorite and/or chlorite solution and acid solution and a vacuum pump (4) and/or compressed gas supply connected to the reactor (1)
**characterized in that**
the reactor (1) is formed by a corrugated tube that is arranged horizontally or with a slope, the lines for the supply of perchlorate, chlorate, hypochlorite and/or chlorite solution and acid solution and the connection to the vacuum pump (4) and/or a gas outlet are arranged in a section at one end, the inlet end, of the reactor (1), and an outlet and, if necessary, a pressurized gas supply at the other end, the outlet end, of the reactor (1), wherein the diameter of the reactor (1), the feed quantities of perchlorate, chlorate, hypochlorite and/or chlorite solution and acid solution, the vacuum/pressurized gas supply and, if necessary, the slope of the reactor (1) are adapted to one another in such a way that the supplied perchlorate, chlorate, hypochlorite and/or chlorite solution and acid solution form a liquid phase (2) for the conversion of perchlorate, chlorate, hypochlorite and/or chlorite with acid to form chlorine and/or chlorine dioxide (3) and the chlorine and/or chlorine dioxide (3) evaporate from the liquid phase (2) and a gas phase is formed, wherein the liquid phase and the gas phase are being conducted in countercurrent.

2. Device according to claim 1, **characterized in that** it comprises a supply for diluent gas, the diluent gas preferably being air, carbon dioxide, nitrogen or another gas stable to chlorine and chlorine dioxide, or particularly preferred an aerosol of water in air or another of the gases mentioned.

3. Device according to claim 1 or 2, **characterized in that** there are several supply points for diluent gas, preferably one at the outlet and one at the point of highest chlorine and/or chlorine dioxide concentration.

4. Device according to one of claims 1 to 3, **characterized in that** a solution containing hydrogen carbonate and/or carbonate is fed to the reactor (1), the amount of hydrogen carbonate and/or carbonate being such that a quantity of carbon dioxide effective as diluent gas is formed by the reaction with the acid, preferably 0.25 to 5 mol of hydrogen carbonate and/or carbonate per mol of perchlorate, chlorate, hypochlorite and/or chlorite are contained in the perchlorate, chlorate, hypochlorite and/or chlorite solution.

5. Device according to one of claims 1 to 4, **characterized in that** the reactor (1) has a ratio of diameter to length of at least 1:100, preferably at least 1:200.

6. Device according to one of claims 1 to 5, **characterized in that** the reactor (1) has a length of 0.5 to 50 m, preferably 1 to 20 m.

7. Device according to one of claims 1 to 6, **characterized in that** the reactor (1) has a slope of up to 60° horizontally and is preferably wound around a pipe or a rod.

8. Device according to one of claims 1 to 7, **characterized in that** it has a water supply in the section at one end of the reactor (1).

9. Device according to one of claims 1 to 8, **characterized in that** the reactor (1) has external and/or internal cooling.

10. Device according to one of claims 1 to 9, **characterized in that** the lines for the supply of perchlorate, chlorate, hypochlorite and/or chlorite solution and/or acid solution are branched and are arranged at several consecutive points of the reactor (1).

11. Device according to one of claims 1 to 10, **characterized in that** it has a container with fresh or demineralized water in which the chlorine and/or chlorine dioxide gas (3) outgassed from the reactor (1) is dissolved.

## Revendications

1. Dispositif pour la préparation continue de chlore et/ou de dioxyde de chlore pur(s), qui comprend un réacteur (1), des conduites séparées pour l'alimentation en solution de perchlorate, de chlorate, d'hypochlorite et/ou de chlorite et en solution d'acide et une pompe à vide (4) et/ou une alimentation en gaz sous pression, reliée(s) au réacteur (1),
**caractérisé en ce que**
le réacteur (1) est formé par un tuyau ondulé, qui est disposé horizontalement ou avec une pente, les conduites pour l'alimentation en solution de perchlorate, de chlorate, d'hypochlorite et/ou de chlorite et en solution d'acide et la liaison à la pompe à vide (4) et/ou à une sortie de gaz sont disposées dans une section en une extrémité, l'extrémité d'entrée, du réacteur (1) et une sortie ainsi que le cas échéant une alimentation en gaz sous pression sont disposées en l'autre extrémité, l'extrémité de sortie, du réacteur (1), le diamètre du réacteur (1), les quantités alimentées de solution de perchlorate, de chlorate, d'hypochlorite et/ou de chlorite et de solution d'acide, le vide/l'alimentation en gaz sous pression et le cas échéant la pente du réacteur (1) étant adaptés les uns aux autres de manière telle que la solution de perchlorate, de chlorate, d'hypochlorite et/ou de chlorite et la solution d'acide alimentées forment une phase liquide (2) pour la transformation du perchlorate, du chlorate, de l'hypochlorite et/ou du chlorite avec l'acide en chlore et/ou en dioxyde de chlore (3) et le chlore et/ou le dioxyde de chlore (3) se dégageant sous forme gazeuse de la phase liquide (2) et formant une phase gazeuse, la phase liquide et la phase gazeuse étant guidées à contre-courant.

2. Dispositif selon la revendication 1, **caractérisé en ce qu'**il comprend une alimentation pour du gaz de dilution, le gaz de dilution étant de préférence de l'air, du dioxyde de carbone, de l'azote ou un autre gaz stable au chlore et au dioxyde de chlore et de manière particulièrement préférée un aérosol d'eau dans de l'air ou dans un autre des gaz mentionnés.

3. Dispositif selon la revendication 1 ou 2, **caractérisé en ce qu'**il présente plusieurs sites d'alimentation pour du gaz de dilution, de préférence un au niveau de la sortie et un au niveau de la concentration la plus élevée en chlore et/ou en dioxyde de chlore.

4. Dispositif selon l'une quelconque des revendications 1 à 3, **caractérisé en ce que** le réacteur (1) est alimenté en une solution contenant de l'hydrogénocarbonate et/ou du carbonate, la quantité d'hydrogénocarbonate et/ou de carbonate étant dimensionnée de manière telle qu'une quantité de dioxyde de carbone active comme gaz de dilution est formée par la réaction avec l'acide, la solution de perchlorate, de chlorate, d'hypochlorite et/ou de chlorite contenant de préférence 0,25 à 5 moles d'hydrogénocarbonate et/ou de carbonate par mole de perchlorate, de chlorate, d'hypochlorite et/ou de chlorite.

5. Dispositif selon l'une quelconque des revendications 1 à 4, **caractérisé en ce que** le réacteur (1) présente un rapport du diamètre à la longueur d'au moins 1:100, de préférence d'au moins 1:200.

6. Dispositif selon l'une quelconque des revendications 1 à 5, **caractérisé en ce que** le réacteur (1) présente une longueur de 0,5 à 50 m, de préférence de 1 à 20 m.

7. Dispositif selon l'une quelconque des revendications 1 à 6, **caractérisé en ce que** le réacteur (1) présente une pente allant de l'horizontale jusqu'à 60° et est de préférence enroulé autour d'un tube ou d'une tige.

8. Dispositif selon l'une quelconque des revendications 1 à 7, **caractérisé en ce qu'**il présente une alimentation en eau dans la section en une extrémité du réacteur (1).

9. Dispositif selon l'une quelconque des revendications 1 à 8, **caractérisé en ce que** le réacteur (1) présente un refroidissement externe et/ou interne.

10. Dispositif selon l'une quelconque des revendications 1 à 9, **caractérisé en ce que** les conduites pour l'alimentation en solution de perchlorate, de chlorate, d'hypochlorite et/ou de chlorite et/ou en solution d'acide sont ramifiées et sont disposées en plusieurs sites situés les uns derrière les autres du réacteur (1 ).

11. Dispositif selon l'une quelconque des revendications 1 à 10, **caractérisé en ce qu'**il présente un récipient comprenant de l'eau fraîche ou déminéralisée, dans lequel le chlore dégagé sous forme gazeuse et/ou le dioxyde de chlore (3) dégagé sous forme gazeuse du réacteur (1) est dissous.
